# EUROPEAN PATENT APPLICATION

(11) **EP 3 725 600 A1**
(43) Date of publication of application: **21.10.2020**
(21) Application number: 18889530.4
(22) Date of filing: 10.12.2018
(51) Int. Cl.: B60R 21/214, B60R 21/231

(54) **AIRBAG, AIRBAG SYSTEM, AND AUTOMOBILE**

(30) Priority: 15.12.2017 CN 201711346575; 23.03.2018 CN 201810244866
(71) Applicant: Nio Nextev Limited, Hong Kong (CN)
(72) Inventor: ZHU, Maomao, Hong Kong (CN); SHI, Jun, Hong Kong (CN)
(74) Representative: Barker Brettell LLP
(86) International application number: PCT/CN2018/120091
(87) International publication number: WO 2019/114658

(57) **Abstract**

Disclosed are an airbag, an airbag system and an automobile. The airbag is accommodated at a top beam of a front windshield in a folded state. The airbag is deployed from top to bottom after being triggered. In a deployed state, the airbag has a main gas bag, which has a drop shape in a longitudinal section. The airbag does not occupy the space in a dashboard, thereby providing a larger space for a front passenger, and improving the passenger comfort. Moreover, the airbag can be deployed quickly with high safety.

## Description

### Technical Field

The invention relates to the field of vehicle safety devices, and in particular to a top-mounted airbag, and an airbag system and an automobile having same.

### Background Art

In the design of airbags for front passenger seats of the existing vehicles, the airbag is generally accommodated in a dashboard, so that the size of the dashboard will accordingly be designed to be relatively large, occupying the available space for a passenger in the front passenger seat.

### Summary of the Invention

An object of the invention is to solve or at least alleviate the problems existing in the prior art.

According to some features, an object of the invention is to reduce the size of the dashboard to increase the front passenger seat space.

According to some features, an object of the invention is to provide a top-mounted airbag with a high inflation speed and good safety.

According to some features, an object of the invention is to provide a top-mounted airbag that is easy to manufacture and has low costs.

According to some aspects, there is provided an airbag. The airbag is accommodated at a top beam of a front windshield in a folded state; the airbag is deployed from top to bottom after being triggered; and in a deployed state, the airbag has a main gas bag, which has a drop shape in a longitudinal section.

Optionally, the drop-shaped main gas bag comprises a pointed top and an arc-shaped bottom.

Optionally, in the above airbag, the main gas bag of the airbag comprises a main sheet and side sheets on two sides, and the main gas bag is formed by joining the main sheet and the side sheets on the two sides.

Optionally, in the above airbag, at least one of the side sheets on the two sides is provided with a gas discharge port.

Optionally, in the above airbag, the main gas bag is a regular column in the deployed state.

Optionally, in the above airbag, the airbag is accommodated behind a sun visor, and during deployment of the airbag, the airbag pushes the sun visor away and is deployed downward between the sun visor and the top beam.

Optionally, in the above airbag, the airbag further comprises a gas guide bag, which is provided between a gas generator and the main gas bag.

Optionally, in the above airbag, in the deployed state, the gas guide bag has a flat rectangular shape.

Optionally, in the above airbag, the gas guide bag is integrally formed with the main gas bag.

Optionally, in the above airbag, in the deployed state, a back side of the airbag has a smooth transition arc shape, and a front side of the airbag has a raised portion corresponding to the chest and abdomen of a user.

In another aspect, there is provided an airbag system comprising a controller, an airbag sensor, and an airbag according to various embodiments, wherein the controller triggers the airbag when receiving a signal from the airbag sensor.

In yet another aspect, there is provided an automobile equipped with an airbag according to various embodiments.

Optionally, in the above automobile, the airbag is provided at a front passenger position of the automobile.

The airbag according to the invention does not occupy the space in a dashboard, thereby providing a larger space for a front passenger, and improving the passenger comfort.

Moreover, the airbag according to the invention can be deployed quickly with high safety.

Furthermore, the airbag according to the invention has a simple structure, is easy to manufacture, and has low costs.

### Brief Description of the Drawings

The disclosure of the invention will become more readily understood with reference to the accompanying drawings. Those skilled in the art will readily appreciate that the accompanying drawings are merely for illustrative purposes and are not intended to limit the scope of protection of the invention. In addition, like components are indicated by like numbers in the figures, in which:
Fig. 1 shows a view of an airbag inside a vehicle in a deployed state; and
Fig. 2 shows a view of only the airbag in the deployed state.

### Detailed Description of Embodiments

It can be readily understood that according to the technical solution of the invention, a person of ordinary skill in the art may propose multiple interchangeable structures and implementations without changing the essential spirit of the invention. Therefore, the following specific embodiments and the accompanying drawings are merely exemplary descriptions of the technical solutions of the invention, and should not be construed as the entirety of the invention or construed as limiting the technical solution of the invention.

Directional terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different conditions in use. Therefore, these or other orientation terms should not be construed as restrictive terms as well.

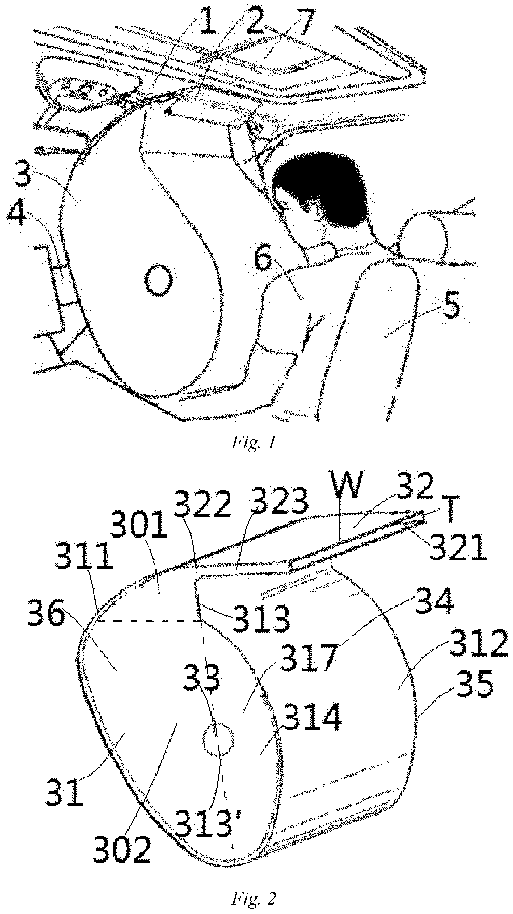

Fig. 1 shows a schematic view of the interior of the vehicle at a front passenger seat, wherein an airbag 3 is in a deployed state. It should be appreciated that, the airbag 3 is accommodated at a top beam 1 of a front windshield in a folded state. In a vehicle model having a sunroof 7, the airbag 3 is accommodated between the top beam 1 of the front windshield and the sunroof 7. In some embodiments, the airbag 3 is rapidly deployed from top to bottom after being triggered to provide cushioning for a passenger. In some embodiments, the airbag 3 is accommodated behind a sun visor 2 when in the folded position, and during deployment, the airbag pushes the sun visor 2 away, rapidly emerges from a gap between the sun visor 2 and the top beam 1 of the front windshield, and is deployed into the deployed state as shown in Fig. 1. In the deployed state, the airbag 3 is located between a dashboard 4 (and the front windshield) and a passenger 6 sitting on a seat 5, and serves as a cushion to prevent the passenger from directly hitting the front windshield. It should be appreciated that, although the embodiments of the invention are described with respect to an airbag for a front passenger, but the airbags according to embodiments of the invention are not limited to being used for the front passenger of the vehicle, and can also be used at other suitable locations in the vehicle.

As shown in Fig. 2, the airbag 3 has a main gas bag 31. The main gas bag 31, in the deployed state, has a drop shape in a longitudinal section. The so-called longitudinal section refers to a vertical section in a front-rear direction of the vehicle. The so-called drop shape refers to the shape similar to the natural shape of a liquid such as a water drop under gravity, and more specifically, the drop shape includes a sharper top and a nearly circular bottom. The shape of the main gas bag 31 of the airbag 3 according to the embodiment of this application, after deployment, similarly has a pointed top 301 and a substantially (semi)circular bottom 302, wherein the pointed top 301 of the main gas bag 31 has a gradually expanding shape, which facilitates rapid diffusion of gas and filling of the main gas bag 31 of the airbag, and the arc-shaped bottom 302 can provide good cushioning and better protect the passenger. In some embodiments, the airbag 3 also comprise a flat gas guide bag 32. The gas guide bag 32 may have a flat shape. The so-called flat shape means that the width W of the gas guide bag 32 is much larger than the thickness T thereof. For example, the width W of the gas guide bag 32 may be more than 5 times, even more than 10 times the thickness T thereof. The gas guide bag 32 is provided between a gas generator (not shown) and the main gas bag 31, and has a first end 321 for connecting to the gas generator and a second end 322 for connecting to the main gas bag 31. In some embodiments, as shown in Fig. 2, the shape of the gas guide bag 32 is formed as a flat rectangular shape. In some embodiments, during deployment of the airbag, the gas guide bag 32 is located exactly in the gap between the sun visor 2 and the top beam 1 of the front windshield, and the flat shape of the gas guide bag can allow gas to pass therethrough to inflate the main gas bag without excessive opening of the sun visor, such that the airbag can be deployed quickly. The so-called "rectangular shape" means that the gas guide bag 32 is substantially rectangular in the longitudinal section perpendicular to a gas flow direction (ignoring the elastic deformation of the gas guide bag 32 under the gas pressure). In some embodiments, the gas guide bag 32 has substantially the same thickness T in each of the longitudinal sections. In some embodiments, the thickness T of the gas guide bag 32 gradually increases from the first end 321 to the second end 322 in the gas flow direction. In some embodiments, the width W of the gas guide bag 32 remains the same and is equal to the width of the main gas bag 31 of the airbag 3. In some embodiments, the main gas bag 31 and the gas guide bag 32 are integrally formed. In an alternative embodiment, a separate gas guide bag 32 may also be used, and the gas guide bag 32 may be stitched to the main gas bag 31.

In some embodiments, the airbag 3 may be formed by joining three sheets, more specifically, is formed by joining a main sheet 34 and side sheets 35, 36 on two sides of the main sheet 34. In some embodiments, the main sheet 34 and the two side sheets 35, 36 are stitched together. In some embodiments, the two side sheets 35, 36 may be formed in a drop shape and has narrow strips 323 corresponding to the gas guide bag, and the main sheet 34 may be a rectangular sheet when laid flat before being joined. The two long sides of the rectangular main sheet 34 are respectively joined to the two side sheets 35, 36, for example, being air-tightly joined to each other by means of stitching, thereby forming the airbag 3 according to the embodiments of the invention. The obtained airbag 3 has a regular column shape corresponding to the shape of the side sheet 35, 36 in the deployed state (ignoring the elastic deformation of the airbag caused by inflation). The so-called regular column shape refers to having two planes parallel to each other defined by the two side sheets, and a side plane defined by the main sheet 34 connected between the two parallel planes and perpendicular to the two parallel planes. In some embodiments, a gas discharge port 33 may be formed on one or both of the two side sheets 35, 36, and the gas in the airbag may be discharged through the gas discharge port 33 when the airbag is deployed, such that the passenger can leave the seat safely.

In some embodiments, the main gas bag 31 of the airbag 3 may have a back side 311 with an arc-shaped smooth transition. The so-called back side of the airbag is the side facing away from the passenger on the seat. The smooth transition back side 311 helps to direct the gas flow to quickly fill the airbag 3. In contrast, a front side (the side facing the passenger) of the main airbag 31 of the airbag 3 has a straight transition segment 313, and then the main gas bag 31 extends downward from the straight transition segment 313. The main gas bag bulges forward (in the direction of the passenger) from an extension plane 313' of the straight transition segment 313 to form a bulged portion 317. As shown in Fig. 1, the bulged portion 317 corresponds to a portion below the neck of the passenger, such as the chest or the abdomen (collectively referred to as the chest and abdomen), and above the bulged portion 317, corresponding to the position of the head of the passenger, the airbag is spaced from the passenger so as not to hit the head of the passenger.

The airbag 3 according to the invention adopts a top-mounted arrangement, frees up the space of the dashboard, provides a larger space for the front passenger, and improves the passenger comfort. Moreover, the airbag according to the present invention can be deployed quickly. The design of the gas guide bag allows the gas to quickly fill the main gas bag when the sun visor is slightly opened. The special drop shape of the main gas bag conforms to the aerodynamic principle, so that the air can quickly fill the main gas bag. Furthermore, the airbag according to the invention can be formed by stitching three sheets, has a simple structure, is easy to manufacture, and has low costs.

According to some embodiments, there is also provided an airbag system comprising a controller, an airbag sensor, and the airbag 3 according to various embodiments of the invention, wherein the controller triggers the airbag when receiving a signal from the airbag sensor.

According to some embodiments, there is also provided an automobile equipped with the airbag 3 according to various embodiments of the invention. In some embodiments, the airbag 3 is configured as a front passenger airbag.

The particular embodiments described above are intended merely to more clearly describe the principles of the invention, in which each component is clearly shown or described in order to facilitate a better understanding of the principles of the invention. Various modifications or variations of the invention could be readily made by those skilled in the art without departing from the scope of the invention. It should therefore be understood that such modifications or variations are intended to be included within the scope of protection of the invention.

## Claims

1. An airbag, **characterized in that** the airbag is accommodated at a top beam of a front windshield in a folded state; the airbag is deployed from top to bottom after being triggered; and in a deployed state, the airbag has a main gas bag, which has a drop shape in a longitudinal section.

2. The airbag according to claim 1, **characterized in that** the main gas bag of the airbag comprises a main sheet and side sheets on two sides, and the main gas bag is formed by joining the main sheet and the side sheets on the two sides.

3. The airbag according to claim 1 or 2, **characterized in that** at least one of the side sheets on the two sides is provided with a gas discharge port.

4. The airbag according to claim 1, **characterized in that** the main gas bag is a regular column in the deployed state.

5. The airbag according to claim 1, **characterized in that** the airbag is accommodated behind a sun visor, and during deployment of the airbag, the airbag pushes the sun visor away and is deployed downward between the sun visor and the top beam.

6. The airbag according to claim 1, **characterized in that** the airbag further comprises a gas guide bag, which is provided between a gas generator and the main gas bag.

7. The airbag according to claim 6, **characterized in that** in the deployed state, the gas guide bag has a flat rectangular shape.

8. The airbag according to claim 6, **characterized in that** the gas guide bag is integrally formed with the main gas bag.

9. The airbag according to claim 1, **characterized in that** in the deployed state, a back side of the airbag has a smooth transition arc shape, and a front side of the airbag has a raised portion corresponding to the chest and abdomen of a user.

10. An airbag system, **characterized by** comprising a controller, an airbag sensor, and an airbag according to any one of claims 1-9, wherein the controller triggers the airbag when receiving a signal from the airbag sensor.

11. An automobile, **characterized in that** the automobile is equipped with an airbag according to any one of claims 1-9.

12. The automobile according to claim 11, **characterized in that** the airbag is provided at a front passenger position of the automobile.
